# EUROPEAN PATENT SPECIFICATION

(11) **EP 3 626 446 B1**
(45) Date of publication and mention of the grant of the patent: **12.10.2022**
(21) Application number: 19199068.8
(22) Date of filing: 23.09.2019
(51) Int. Cl.: B32B 23/08, B32B 7/12, B32B 27/36, B65D 65/40

(54) **COMPOSTABLE MATERIAL, IN PARTICULAR INTENDED FOR PACKAGING, AND METHOD OF PRODUCING COMPOSTABLE MATERIAL**
KOMPOSTIERBARES MATERIAL, INSBESONDERE ZUM VERPACKEN, UND VERFAHREN ZUR HERSTELLUNG VON KOMPOSTIERBAREM MATERIAL
MATÉRIAU COMPOSTABLE, NOTAMMENT DESTINÉ À L'EMBALLAGE, ET PROCÉDÉ DE FABRICATION DE MATÉRIAU COMPOSTABLE

(30) Priority: 24.09.2018 PL 42720918
(43) Date of publication of application: 25.03.2020
(73) Proprietor: SILBO Sp. z o.o., 44-240 Zory (PL)
(72) Inventor: Spiewok, Marcin, 44-203 Rybnik (PL)
(74) Representative: Trawinska, Urszula

(56) References cited:
- WO-A1-2016/174665
- US-A1- 2014 349 045
- US-A1- 2015 217 537
- US-A1- 2017 211 237
- BASF SE: "Epotal P100 ECO", , 1 April 2015 (2015-04-01), pages 1-2, XP055647649, Retrieved from the Internet: URL:https://www.dispersions-pigments.basf. com/portal/load/fid819947/TI_ED_2215_e_Epo tal_P100_ECO_187214_SCREEN_02.pdf [retrieved on 2019-11-29]

## Description

A compostable material, in particular intended for packaging, and a method for producing the compostable material.

The object of the invention is a compostable stratified material in the form of sheets of a continuous string, intended mainly for packaging food products and industrials products with a short shelf life, by means of packaging machines. The object of the invention is also a method for producing a compostable material intended for packaging food products.

Packaging machines, e.g. of the VFFS type, package products, usually food products, e.g. vegetables, fruit, into finished packages comprising these products by an assembly of devices for bending, folding, welding, filling and cutting the packaging material in the form of a continuous string wound onto a roller.

In the case of food products, their transport and storage require proper packaging parameters, such as resistance to moisture, barrier properties, rigidity, durability. Also, one cannot disregard the significance of visual parameters, such as transparency, or the ability to print. Confecting of products takes place by machine, usually at the producer's place, in such a manner that the machine welds or glues into a tubular body, and subsequently welds or glues and cuts off the individual modules of a reel-fed, previously prepared continuous strand of film comprising proper prints. In this manner, products are packaged into the created modules.

Due to the increasing contamination of the environment with poorly degradable plastic packages, there is a gain in significance of packages of compostable plastics, whose time of decomposition is shorter than a year. Compostability of packages is also imposed by the introduced regulations. Composting involves processing of organic waste under aerobic conditions, where organic matter is processed by naturally occurring microorganisms. There are two distinguishable levels of composting: industrial and at home. During industrial composting, the temperature in the composting chamber can reach 70°C. The composting process occurs in high humidity and over a period of several months.

The most popular and long known compostable films include the cellulose film. Examples of such films include Celofan^{™} and the NatureFlex^{™} film, which is produced by Futamura Chemicals Co. Ltd.

Compostable films are also produced based on compostable polymers made of biomass under the impact of chemical or biocatalytic transformation of the PLA type (polylactide), or of petrochemical materials such as PBAT (polybutylene adipate terephthalate) or PBSA (Poly(butylene succinate-co-adipate) and PBS (polybutylene succinate). The PCL polymer (Polycaprolactone) is often used as an additive.

Examples of such films can be found in publication US2018186129A1, which discloses biodegradable film sheets made of layers, comprising a polymer layer comprising between approximately 70 and approximately 90% (by weight) of PBSA, and between approximately 10 and approximately 30% (by weight) of PLA, in the inner layer or in the outer layer, where, if the outer layer of the sheet comprises an inner layer comprising PBAT. This publication discloses various combinations of layers and their compositions.

Publication WO2016174665 (A1) in turn discloses biodegradable sheets comprising an inner polymer layer comprising approximately 35-45% of PCL and approximately 55-65% of PLA, PBS, PBSA or a mixture thereof. The publication also disclosures a laminate consisting of laminate of above mentioned polymers with metalized or plain cellulose film bonded by water -based glue. The thickness of the laminate is over 70 µm.

Publication WO2016067285 (A1) discloses a biodegradable sheet comprising at least two polymer layers, the first polymer layer comprising a mixture of at least two various biodegradable polymers selected from a group comprising PLA, PCL, PBS and PBSA; and in which the second polymer layer comprises a biodegradable polymer selected from a group comprising PBS, PBSA, a mixture of PLA and PBS and a mixture of PLA and PBSA. Publication WO2015059709 (A1) discloses a biodegradable sheet comprising at least one layer, which is a direct contact layer, intended for contacting materials such as liquids, while retaining the mechanical properties of the sheet and extending the biodegradable shelf life of the sheet. The direct contact layer can comprise a hydrophobic polymer selected from poly (epsilon-caprolactone) (PCL) polyhydroxybutyrate (PHB), polydioxanone (PDO), polyglycolic acid (PGA), polybutylene succinate (PBS), polybutylene succinate adipate (PBS A), poly(lactic acid) (PL A), polybutylene adipate polyterephthalate (PBAT), polyhydroxyalkanoates (PHA), such as polyhydroxybutyrates (PHB), polyhydroxyvalerates (PHV) and polyhydroxybutyrate-hydroxyvalerate copolymers (PHBV), or any mixture thereof. The sheet undergoing biodegradation can further comprise surface-processed particles of nanoclay, PVOH grafted with a cross-linking agent and PBS or PBS A. The biodegradable sheet can further comprise at least one metallised biodegradable laminate layer. Publication WO2013186778A1 discloses a biodegradable sheet comprising at least one layer, which comprises a polymer undergoing biodegradation and surface-processed particles of nanoclay, or at least one layer which comprises PVOH grafted with a cross-linking agent and PBS or PBSA, or a combination of a biodegradable polymer and surface-modified particles of nanoclay, and at least one layer which comprises PVOH grafted with a cross-linking agent and PBS or PBSA.

One known film made of transformed biodegradable plastics is the TP302 film from TIPA Corp. LTD. This coextruded film has the features of high transparency, weldability, it is compostable and suitable for VFFS-type packaging machines.

Another prior art publication US 2014/349045 A1 disclosures a process for lamination of biodegradable polymer film with cellulose film. The process involves gluing the two layers where the glue is imposed on polymer layer and dried with hot air and then cellulose film is adhered and then the rest of the moisture is removed by hot nip roller and pressing, next laminate is wound on a roll.

A disadvantage of cellulose films involves low resistance to moisture and contact with water. Their advantage in turn involves high barrier properties in relation to gases, e.g. oxygen, high rigidity of material, resistance to high temperatures and high transparency.

Films based of transformed biodegradable plastics are in turn characterised by resistance to contact with water and moisture, as well as susceptibility to welding at relatively low temperature in a range of 80-120°C. Low rigidity of these films is in turn their disadvantage.

The purpose of the invention is to provide a sheet of compostable material eliminating the drawbacks of the two aforementioned types of film, namely to provide a material with high barrier properties for gases, high barrier properties for water, high rigidity, and having good parameters of weldability.

The essence of the invention constitutes a compostable material in the form of a stratified sheet comprising a combination of film sheets made of compostable materials characterised in that it consists of two laminated layers of film sheets, where one layer constitutes a plastic sheet of at least one biodegradable polymer generated by a chemical or biocatalytic transformation with a thickness of 20 µm to 50 µm and the second layer constitutes a sheet of cellulose film with a thickness of 19µm to 23µm, the layers being connected to each other by glue constituting a water dispersion of a polyester polyurethane elastomer with a hardener. Preferably, the layer of a transformed biodegradable polymer comprises a mixture of at least two various biodegradable polymers selected from a group comprising PLA, PCL, PBS and PBSA.

A chemically or catalytically transformed polymer is meant to be understood as a synthetic polymer produced as a result of polymerisation from a monomer, or a modified polymer produced via a chemical reaction of a previously produced polymer or a natural biopolymer with low molecular compounds or other polymers. The synthetic polymer can be produced by means of a chemical synthesis of a monomer produced from renewable materials, e.g. PLA, or petrochemical materials such as PBAT, PCL, PBS, PBSA.

The method for producing a compostable material involves laminated connection of film sheets by means of glue. The essence of the method according to the invention involves combining in a continuous process one sheet of plastic film of at least one chemically or biocatalytically transformed biodegradable polymer with a thickness of 20 µm to 50 µm with one sheet of cellulose film with a thickness of 19µm to 23µm. The plastic sheet of a transformed polymer is unwound from a roller, and subsequently it is covered with previously prepared glue constituting a combination of a water dispersion of a polyurethane-based polymer with a hardener, in an amount of 2.5-3.0 g/m2. It is subsequently driven through a drying tunnel and subjected to temperature in a range of 90°C - 130°C and infrared radiation. Subsequently, a sheet of cellulose film unwound from the roller is applied. Subsequently, the combined films are driven through a set of pressure rollers and wound onto a roller.

The laminate according to the invention is characterised by features desired on the market, such as good rigidity and transparency, high barrier properties for liquids and gases. All components of the laminate are compostable, which is very advantageous for the environment and further allows disposal with no need to separate the product from the package. The laminate connects very well to other polymer plastics.

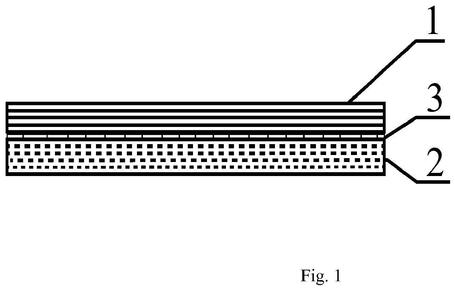

The object of the invention is presented in the drawing, where fig. 1 presents layers of material.

An embodiment of compostable material constitutes a laminate of a cellulose film 1, e.g. the NatureFlex^{™} film with thickness of 19 µm with a film **2** constituting 40% of PCL and approximately 50% of PLA, as well as PBS with thickness of 20µm. The films are connected by a layer of glue **3** constituting a water dispersion of a polyester-polyurethane elastomer hardened with polyfunctional isocyanate.

All used materials including glue are compostable under industrial conditions.

Other embodiments of the invention constitute laminates constituting a combination of sheets: of a cellulose film **1** with thickness of 23 µm and 20 µm and a plastic film **2** of at least one biodegradable polymer provided by a chemical or biocatalytic transformation with thickness of 50 µm. The films are connected by a layer of glue **3** constituting a water dispersion of a polyester-polyurethane elastomer hardened with polyfunctional isocyanate.

The used film **2** is a film constituting 40% of PCL and approximately 50% of PLA as well as PBS.

In another example, the film of polymer plastic constitutes a sheet comprising at least two polymer layers, the first polymer layer comprising a mixture of at least two various biodegradable polymers selected from a group comprising PLA, PCL, PBS and PBSA; and in which the second polymer layer comprises a biodegradable polymer selected from a group comprising PBS, PBSA, a mixture of PLA and PBS and a mixture of PLA and PBSA.

In another example, the film of polymer plastic constitutes a material made of layers, comprising a polymer layer comprising between approximately 70 and approximately 90% (by weight) of PBSA and between approximately 10 and approximately 30% (by weight) of PLA, in the inner layer or in the outer layer, where, if the outer layer of the sheet comprises an inner layer comprising PBAT.

The glue content of the final product in the form of a laminate according to the examples described above does not exceed 7%.

In the aforementioned examples, the hardener comprises 1,6-hexane diisocyanate homopolymer, alpha.-methyl-.omega.-hydroxypoly(oxy-1,2-ethanediyl) polymer with 1,6-diisocyanatohexane.

In another example, the cellulose film used in the above examples comprises an outer weldable layer.

An example of a method for producing the material according to the invention is a process of combining two sheets of compostable films by means of laminating machines. One sheet of plastic film of a chemically or biocatalytically transformed biodegradable polymer, e.g. PLA with additives of other known biodegradable polymers, with at least one sheet of cellulose film, e.g. the NatureFlex film. The plastic sheet of a transformed polymer is unwound from a roller, and subsequently it is covered with previously prepared glue constituting a combination of a water dispersion of a polyester-polyurethane elastomer with a hardener, in an amount of 2.5-3.0 g/m². The sheet with the glue is subsequently driven through a drying tunnel in a temperature of 90°C and infrared radiation. The film moves at 150 m/min. Subsequently, a sheet of cellulose film unwound from a roller is applied; subsequently, the combined films are driven through a set of pressure rollers and wound onto a roller.

The material is found useful in logistics and any branches of industry requiring the packaging of products, in particular products with a short shelf life.

## Claims

1. A compostable material in the form of a stratified sheet comprising a combination of film sheets made of compostable materials **characterised in that** it consists of two laminated layers of film sheets, where one layer constitutes a plastic sheet of at least one biodegradable polymer generated by a chemical or biocatalytic transformation with a thickness of 20 µm to 50 µm and the second layer constitutes a sheet of cellulose film with a thickness of 19µm to 23µm, the layers being connected to each other by glue constituting a water dispersion of a polyester polyurethane elastomer with a hardener.

2. A compostable material according to claim 1, **characterised in that** the layer of transformed biodegradable polymer comprises a mixture of at least two various biodegradable polymers selected from a group comprising PLA, PCL, PBS and PBSA.

3. A method for producing a compostable material involving laminated connection of film sheets by means of glue, **characterised in that** one sheet of plastic film of at least one biodegradable polymer generated by a chemical or biocatalytic transformation with a thickness of 20 µm to 50 µm is combined in a continuous process with one sheet of cellulose film with a thickness of 19µm to 23µm, where the plastic sheet of a transformed polymer is unwound from a roller, and subsequently it is covered with previously prepared glue constituting a combination of a water dispersion of a polyester-polyurethane elastomer with a hardener, in an amount of 2.5-3.0 g/m², it is subsequently driven through a drying tunnel and subjected to temperature within a range of 90°C - 130°C and infrared radiation; subsequently, a sheet of cellulose film unwound from a roller is applied; subsequently, the combined films are driven through a set of pressure rollers and wound onto a roller.

## Patentansprüche

1. Ein kompostierbares Material in Form einer geschichteten Folie umfassend eine Kombination von Folienfolien aus kompostierbaren Materialien, **dadurch gekennzeichnet, dass** es aus zwei laminierten Schichten von Folienfolien besteht, wobei eine Schicht eine Kunststofffolie aus mindestens einem biologisch abbaubaren Polymer darstellt, das dadurch erzeugt wird einer chemischen oder biokatalytischen Umwandlung mit einer Dicke von 20 µm bis 50 µm und die zweite Schicht stellt eine Zellulosefolie mit einer Dicke von 19 µm bis 23 µm dar, wobei die Schichten miteinander durch Klebstoff verbunden sind, der ein Wasser darstellt Dispersion eines Polyester-Polyurethan-Elastomers mit einem Härter.

2. Kompostierbares Material nach Anspruch 1, **dadurch gekennzeichnet, dass** die Schicht aus transformiertem biologisch abbaubarem Polymer eine Mischung aus mindestens zwei verschiedenen biologisch abbaubaren Polymeren umfasst, die aus einer Gruppe ausgewählt sind, die PLA, PCL, PBS und PBSA umfasst.

3. Verfahren zur Herstellung eines kompostierbaren Materials unter laminierter Verbindung von Folienbahnen mittels Klebstoff, **dadurch gekennzeichnet, dass** eine Kunststoffolie aus mindestens einem biologisch abbaubaren Polymer durch eine chemische oder biokatalytische Umwandlung mit einer Dicke von 20 µm bis 50 µm erzeugt wird µm wird in einem kontinuierlichen Prozess mit einer Zellulosefolie mit einer Dicke von 19 µm bis 23 µm kombiniert, wobei die Kunststofffolie eines umgewandelten Polymers von einer Rolle abgewickelt und anschließend mit einer zuvor hergestellten Klebstoffzusammensetzung bedeckt wird eine Kombination aus einer wässrigen Dispersion eines Polyester-Polyurethan-Elastomers mit einem Härter in einer Menge von 2,5-3,0 g/m2, wird anschließend durch einen Trockentunnel gefahren und einer Temperatur im Bereich von 90 °C - 130 °C ausgesetzt und Infrarotstrahlung; anschließend wird eine von einer Rolle abgewickelte Zellulosefolie aufgebracht; Anschließend werden die kombinierten Folien durch einen Satz Andruckrollen gefahren und auf eine Rolle aufgewickelt.

## Revendications

1. Matériau compostable sous la forme d'une feuille stratifiée comprenant une combinaison de feuilles de film faites de matériaux compostables **caractérisé en ce qu'**il est constitué de deux couches stratifiées de feuilles de film, où une couche constitue une feuille plastique d'au moins un polymère biodégradable généré par une transformation chimique ou biocatalytique d'une épaisseur de 20 µm à 50 µm et la deuxième couche constitue une feuille de film cellulosique d'une épaisseur de 19µm à 23µm, les couches étant reliées entre elles par de la colle constituant une nappe dispersion d'un élastomère polyester polyuréthane avec un durcisseur.

2. Matériau compostable selon la revendication 1, **caractérisé en ce que** la couche de polymère biodégradable transformé comprend un mélange d'au moins deux polymères biodégradables différents choisis dans un groupe comprenant le PLA, le PCL, le PBS et le PBSA.

3. Procédé de fabrication d'un matériau compostable par liaison laminée de feuilles de film au moyen de colle, **caractérisé en ce qu'**une feuille de film plastique d'au moins un polymère biodégradable généré par une transformation chimique ou biocatalytique d'une épaisseur de 20 µm à 50 µm est combiné dans un processus continu avec une feuille de film de cellulose d'une épaisseur de 19µm à 23µm, où la feuille de plastique d'un polymère transformé est déroulée d'un rouleau, puis recouverte d'une colle préalablement préparée constituant une combinaison d'une dispersion aqueuse d'un élastomère polyester-polyuréthane avec un durcisseur, en une quantité de 2,5 à 3,0 g/m2, elle est ensuite conduite à travers un tunnel de séchage et soumise à une température dans une plage de 90°C à 130°C et rayonnement infrarouge; ensuite, une feuille de film de cellulose déroulée d'un rouleau est appliquée; ensuite, les films combinés sont entraînés à travers un ensemble de rouleaux presseurs et enroulés sur un rouleau.
